# FASCICULE DE BREVET EUROPEEN

(11) **EP 3 825 580 B1**
(45) Date de publication et mention de la délivrance du brevet: **02.08.2023**
(21) Numéro de dépôt: 20208531.2
(22) Date de dépôt: 19.11.2020
(51) Int. Cl.: F16H 57/04, F01D 25/18

(54) **ALIMENTATION ET RÉCUPÉRATION D' HUILE DE LUBRIFICATION DANS UN RÉDUCTEUR MÉCANIQUE DE TURBOMACHINE D'AÉRONEF**
VERSORGUNG UND RÜCKGEWINNUNG VON SCHMIERÖL IN EINEM MECHANISCHEN REDUKTIONSGETRIEBE FÜR LUFTFAHRZEUG-TURBOTRIEBWERK
SUPPLY AND RECOVERY OF LUBRICATING OIL IN A MECHANICAL REDUCTION GEAR OF AN AIRCRAFT TURBINE ENGINE

(30) Priorité: 22.11.2019 FR 1913114
(43) Date de publication de la demande: 26.05.2021
(73) Titulaire: Safran Transmission Systems, 92700 Colombes (FR)
(72) Inventeur: SIMON, Adrien Louis, 77550 MOISSY-CRAMAYEL (FR)
(74) Mandataire: Gevers & Orès

(56) Documents cités:
- EP-A1- 2 317 181
- EP-A1- 2 559 914
- WO-A1-2014/046926
- US-A1- 2011 124 461

## Description

### Domaine technique de l'invention

La présente invention concerne le domaine des réducteurs mécaniques pour des turbomachines en particulier d'aéronef, et en particulier l'alimentation et la récupération d'huile de lubrification dans ces réducteurs.

### Arrière-plan technique

L'état de l'art comprend notamment les documents WO-A1-2010/092263, FR-A1-2 987 416, EP-A1 -2 317 181, US-A1 -2011/124461 et FR-A1-3 041 054. Le document EP-A1-2317181 divulgue un distributeur avec un circuit d'alimentation et un circuit de récupération d'huile.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés de un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

La présente invention propose un perfectionnement d'un réducteur avec une solution simple, efficace et économique pour améliorer l'alimentation et la récupération de l'huile de lubrification dans ce réducteur.

### Résumé de l'invention

L'invention concerne un distributeur d'huile de lubrification pour un réducteur mécanique de turbomachine, en particulier d'aéronef, selon la revendication 1.

Le distributeur est ainsi conçu pour assurer plusieurs fonctions d'alimentation en huile et de récupération d'huile de lubrification d'un réducteur. Ces fonctions sont assurées par des circuits d'huile indépendants. Un circuit d'huile est dédié à l'alimentation du réducteur en vue de sa lubrification. Un autre circuit d'huile est dédié à la récupération d'huile qui a lubrifié le réducteur et à son évacuation en vue de son recyclage. Les circuits sont indépendants ce qui permet de ne pas gêner la récupération de l'huile par l'alimentation en huile, et inversement. Cela permet en outre de limiter voire d'empêcher le risque d'échauffement de l'huile de lubrification par l'huile récupérée qui est plus chaude du fait de l'absorption de calories lors de la lubrification du réducteur.

L'évacuation rapide de l'huile de la cavité d'un réducteur permet d'en augmenter l'efficacité. En effet, plus vite les calories générées par la transmission de la puissance sont évacuées, plus la température de fonctionnement est basse et moins l'huile a eu le temps de chauffer.

Dans le cas d'un fonctionnement de type planétaire, c'est-à-dire avec porte-satellites fixe et couronne tournante, il n'y a pas de centrifugation de l'huile possible autour du solaire. Il peut arriver ce que l'on appelle du brassage, voire du barattage qui correspond à de l'accumulation d'huile chaude dans le réducteur.

Cette invention est ainsi compatible d'un réducteur planétaire à porte-satellites fixe et couronne tournante. Il est également compatible de tout type de denture (droite, hélicoïdale, chevron). Il est en outre compatible de tout type de porte-satellites qu'il soit monobloc ou de type cage / et porte-cage.

Enfin, il est compatible de tout type de palier de satellite, qu'il soit composé d'éléments roulants, d'un palier hydrodynamique, etc.

Le distributeur selon l'invention peut comprendre une ou plusieurs des caractéristiques suivantes, prises isolément les unes des autres, ou en combinaison les unes avec les autres :
- lesdits circuits comprennent un autre circuit d'alimentation en huile indépendant et configuré pour alimenter en huile en particulier des paliers du réducteur, cet autre circuit d'alimentation comportant au moins une troisième entrée d'huile reliée par une troisième chambre annulaire à plusieurs troisièmes sorties d'huile réparties sur le corps autour dudit axe X,
- le corps du distributeur est réalisé d'une seule pièce.
- la première sortie d'huile du circuit de récupération, la seconde entrée d'huile du circuit d'alimentation, et la troisième entrée d'huile de l'autre circuit d'alimentation, sont orientées en direction radiale par rapport audit axe X.
- chacune des chambres est du type fermé, par opposition à une gouttière par exemple dont la périphérie interne ou externe est ouverte.
- lesdites première, seconde et/ou troisième chambres sont formées par des anneaux tubulaires coaxiaux et intimement liés.
- la première entrée du circuit de récupération, et lesdites secondes sorties du circuit d'alimentation, et lesdites troisièmes sorties de l'autre circuit d'alimentation, sont orientées axialement dans la même direction.
- lesdites entrées du troisième circuit sont situées à proximité des sorties dudit premier circuit.
- le distributeur comprend des bossages répartis sur le corps autour dudit axe X, chacun de ces bossages comportant une des premières entrées du circuit de récupération et une des secondes sorties du circuit d'alimentation.
- la troisième chambre annulaire de l'autre circuit d'alimentation a un diamètre supérieur à celui de la seconde chambre annulaire du circuit d'alimentation, qui est lui-même de préférence supérieur à celui de la première chambre annulaire du circuit de récupération.

L'invention concerne encore un réducteur mécanique pour une turbomachine d'aéronef, ce réducteur comportant une cage définissant un logement de réception d'un solaire central d'axe X de rotation, des satellites disposés autour du solaire, des déflecteurs fixés à la cage et disposés entre les satellites, et un distributeur tel que décrit ci-dessus qui est rapporté et fixé sur la cage et qui est raccordé aux déflecteurs, le distributeur étant configuré pour alimenter en huile de lubrification des dentures du solaire et des satellites, voire des paliers de satellite, et pour récupérer au moins une partie de cette huile par l'intermédiaire desdits déflecteurs.

Avantageusement, chacun des déflecteurs comprend un bloc comportant deux faces latérales opposées de forme générale incurvée s'étendant autour desdits satellites, et sur lesquelles sont situés des orifices d'entrée d'huile en communication fluidique avec le circuit de récupération en huile de dentures du réducteur.

De préférence, lesdits orifices d'entrée d'huile sont reliés à un port de sortie d'huile du bloc du déflecteur, par l'intermédiaire de canaux internes du bloc qui sont conformées pour acheminer l'huile récupérée jusqu'à ce port grâce aux forces centrifuges appliquées sur cette huile projetée par les satellites disposés de part et d'autre du déflecteur

L'invention concerne également un déflecteur pour un réducteur mécanique de turbomachine, en particulier d'aéronef, ce déflecteur étant destiné à être intercalé entre deux satellites adjacents dudit réducteur, ce déflecteur comportant un bloc comprenant un premier circuit d'huile de lubrification qui comprend au moins un port d'entrée d'huile et au moins un orifice ou port de sortie d'huile en vue de la lubrification du réducteur, caractérisé en ce qu'il comprend en outre un second circuit d'huile de lubrification indépendant qui comprend au moins un orifice d'entrée d'huile et au moins un port de sortie d'huile en vue du recyclage d'huile.

Le déflecteur cumule ainsi plusieurs fonctions parmi lesquelles l'alimentation et la récupération d'huile de lubrification d'un réducteur. Chacune de ces fonctions est assurée par un circuit d'huile. Un premier circuit d'huile est dédié à l'alimentation du réducteur en vue de sa lubrification. Le second circuit d'huile est dédié à la récupération d'huile qui a lubrifié le réducteur et à son évacuation en vue de son recyclage. Les circuits sont indépendants ce qui permet de ne pas gêner la récupération de l'huile par l'alimentation en huile, et inversement. Cela permet en outre de limiter voire d'empêcher le risque d'échauffement de l'huile de lubrification par l'huile récupérée qui est plus chaude du fait de l'absorption de calories lors de la lubrification du réducteur.

Cette invention est compatible d'un réducteur planétaire à porte-satellites fixe et couronne tournante. Il est également compatible de tout type de denture (droite, chevron). Il est en outre compatible de tout type de porte-satellites qu'il soit monobloc ou de type cage / porte-cage. Enfin, il est compatible de tout type de palier de satellite, qu'il soit composé d'éléments roulants, d'un palier hydrodynamique, etc.

Le déflecteur selon l'invention peut comprendre une ou plusieurs des caractéristiques suivantes, prises isolément les unes des autres, ou en combinaison les unes avec les autres :
- le port d'entrée d'huile du premier circuit et le port de sortie d'huile du second circuit sont situés à proximité l'un de l'autre et sur une même face dudit bloc,
- le port d'entrée d'huile du premier circuit et le port de sortie d'huile du second circuit sont orientés dans des directions sensiblement parallèles,
- le déflecteur comprend une extrémité radialement interne destinée à être orientée du côté d'un axe principal de rotation du réducteur, et une extrémité radialement externe destinée à être orientée radialement à l'opposé par rapport à cet axe, le port d'entrée d'huile du premier circuit et le port de sortie d'huile du second circuit étant situés au niveau de ladite extrémité radialement interne,
- le premier circuit comprend des orifices de sortie et de projection d'huile qui sont situés au niveau de ladite extrémité radialement interne,
- le premier circuit peut comprendre un orifice ou port de sortie d'huile qui est situé au niveau de ladite extrémité radialement externe,
- le bloc comprend deux faces latérales opposées de forme générale incurvée et sur lesquelles sont situées des orifices d'entrée d'huile dudit second circuit,
- les orifices d'entrée d'huile sont situés au niveau de ladite extrémité radialement interne,
- chacun desdits ports comprend un embout tubulaire de raccordement fluidique et étanche.

L'invention concerne également un porte-satellites pour un réducteur mécanique de turbomachine, en particulier d'aéronef, comportant une cage définissant un logement de réception d'un solaire central d'axe X de rotation, de satellites disposés autour du solaire, ainsi que de déflecteurs tels que décrits ci-dessus qui sont chacun fixés à la cage et intercalés entre deux satellites adjacents.

L'invention concerne en outre un réducteur mécanique de turbomachine, en particulier d'aéronef, comportant au moins un des éléments (déflecteur, distributeur, porte-satellites, etc.), décrits dans ce qui précède.

L'invention concerne enfin une turbomachine comportant au moins un des éléments (déflecteur, distributeur, porte-satellites, réducteur, etc.) décrits dans ce qui précède.

Les caractéristiques des différents aspects de l'invention peuvent être combinées les unes avec les autres.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une section axiale en vue partielle d'un réducteur mécanique,
[Fig.3] la figure 3 est une vue en coupe axiale d'un réducteur mécanique intégrant plusieurs aspects de l'invention,
[Fig.4] la figure 4 est une vue en perspective d'un distributeur d'huile de lubrification du réducteur de la figure 3,
[Fig.5] la figure 5 est une vue partielle en coupe et en perspective du réducteur de la figure 3 et montre un raccordement du distributeur de la figure 4 à un déflecteur,
[Fig.6] la figure 6 est une vue en perspective d'un déflecteur du réducteur de la figure 3,
[Fig.7] la figure 7 est une autre vue en perspective du déflecteur de la figure 6,
[Fig.8] la figure 8 est une vue partielle en coupe transversale du réducteur de la figure 3, et
[Fig.9] la figure 9 est une vue similaire à celle la figure 3 et à plus grande échelle.

### Description détaillée de l'invention

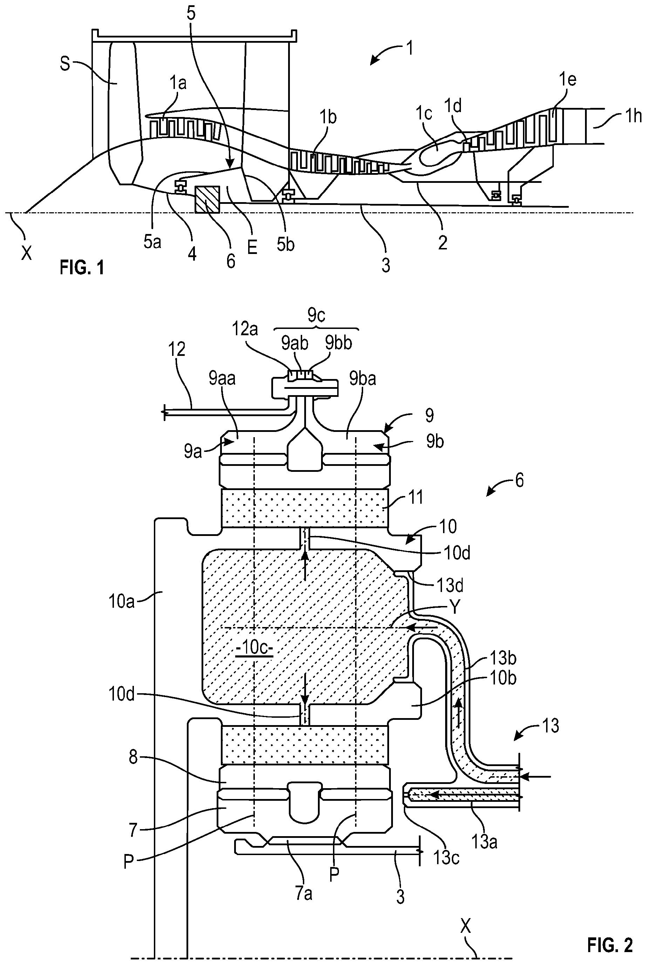

La figure 1 décrit une turbomachine 1 qui comporte, de manière classique, un axe de rotation X, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type planétaire dans lequel la couronne est mobile en rotation.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des étanchéités au niveau d'un palier permettant la traversée de l'arbre de soufflante 4, et en aval par des joints au niveau de la traversée de l'arbre BP 3.

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.
▪ Dans cette configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans l'exemple représenté, la couronne est séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne arrière 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

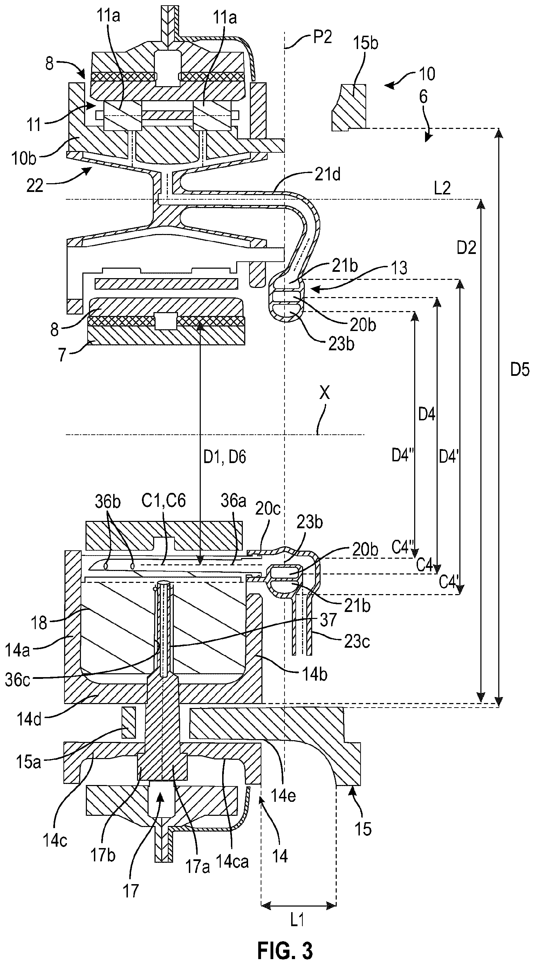

La figure 3 représente un mode de réalisation d'un réducteur 6 comportant plusieurs aspects de l'invention.

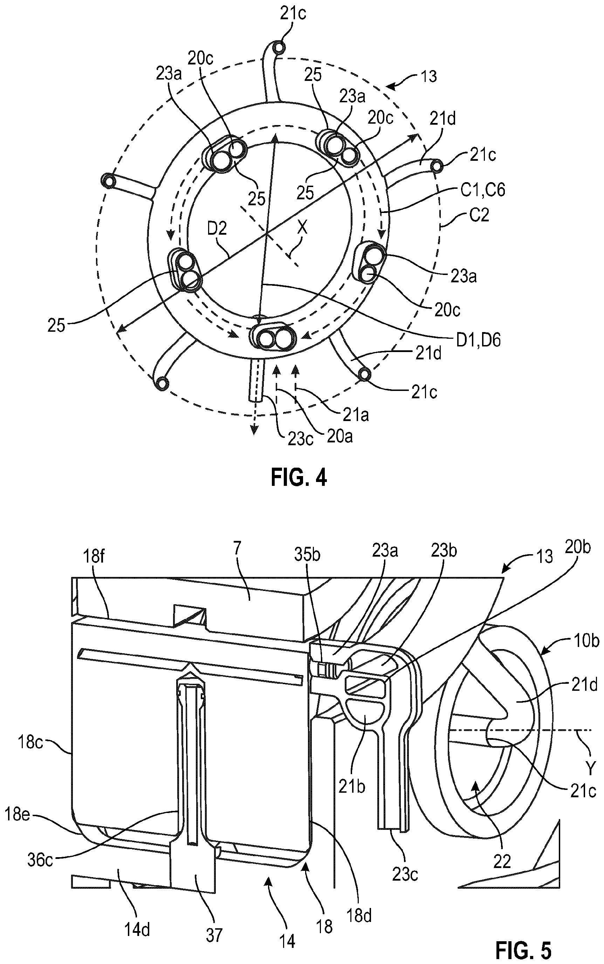

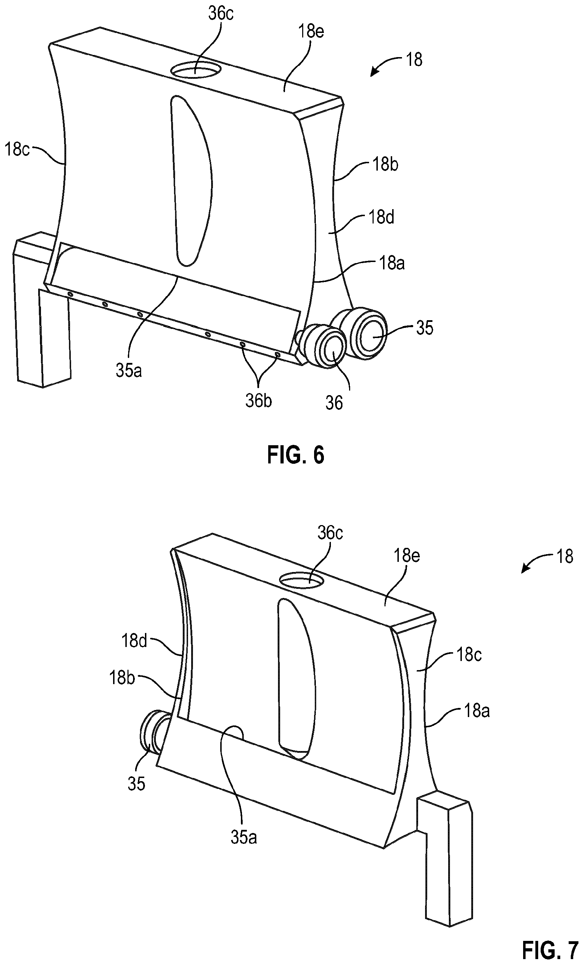

L'un de ces aspects concerne un distributeur d'huile de lubrification et sera décrit dans ce qui suit en référence aux figures 4, 5 et 9 notamment. Un autre aspect de l'invention concerne un déflecteur et sera décrit dans ce qui suit en référence aux figures 5 à 8.

Le réducteur 6 comprend un porte-satellites 10 du type à cage 14 et porte-cage 15, la cage 14 et le porte-cage 15 étant reliés par des liaisons à rotules. La cage 14 comprend deux parois annulaires radiales 14a, 14b s'étendant autour de l'axe X, ces parois 14a, 14b étant parallèles et étant respectivement une paroi radiale amont 14a et une paroi radiale aval 14b. Les parois 14a, 14b sont reliées entre elles à leurs périphéries externes par des couples de pontets 14c, 14d, régulièrement répartis autour de l'axe X. Ces couples de pontets assurent une liaison structurelle entre les parois 14a, 14b. Chaque couple de pontets comprend deux pontets, respectivement radialement externe 14c et radialement interne 14d, qui s'étendent sensiblement parallèlement le long de l'axe X à distance radiale l'un de l'autre.

Chaque couple de pontets forme une chape pour accueillir un doigt 15a du porte-cage 15. Autrement dit, les pontets de chaque couple définissent entre eux un logement de réception d'un doigt 15a du porte-cage 15. Des ouvertures 14e de forme oblongue sont réalisées dans la paroi arrière 14b de telle sorte à laisser passer les doigts 15a entre les pontets 14c, 14d. La paroi 14a peut comporter des ouvertures similaires alignées axialement avec les ouvertures 14e de la paroi 14b.

Le nombre de doigts 15a est égal au nombre de couples de pontets 14c, 14d et est de 5 dans l'exemple représenté. Ces doigts 15a s'étendent en saillie axialement vers l'amont depuis un anneau 15b du porte-cage 15 s'étendant autour de l'axe X. Les doigts 15a du porte-cage 15 sont engagés dans les logements inter-pontets par translation axiale depuis l'arrière, à travers les ouvertures 14e de la paroi 14b.

Chaque doigt 15a comprend, sensiblement en son milieu, un évidement de montage d'un palier (non représentée) destiné à être traversé par une broche cylindrique 17 portée par chaque couple de pontets 14c, 14d. Chaque broche 17 traverse le logement inter-pontets et a une orientation sensiblement radiale par rapport à l'axe X. Chaque broche 17 comporte un corps cylindrique 17a relié à une extrémité, ici radialement externe, à une collerette 17b. La broche 17 est ici engagée par translation radiale depuis l'extérieur à travers des orifices radiaux des pontets 14c, 14d, sa collerette 17b étant destinée à venir en appui radial sur une face plane 14ca du pontet externe 14c. Après insertion de la broche 17 dans les orifices des pontets, jusqu'à mise en appui de la collerette 17b sur le pontet externe, la collerette 17b est fixée à ce pontet par exemple par vissage.

Comme on le voit dans les dessins, en position assemblée, l'anneau 15b du porte-cage 15 est écarté axialement d'une distance L1 prédéterminée de la paroi aval 14b en regard de la cage 14 (figure 3).

La cage 14 définit un logement interne de réception du solaire 7 d'axe X, des satellites 8 disposés autour du solaire 7 et engrenés avec lui, ainsi que de déflecteurs 18 qui seront décrits en détail dans ce qui suit en référence aux figures 5 à 9.

Le réducteur 6 comprend un distributeur 13 d'huile de lubrification perfectionné qui est mieux visible à la figure 4.

Le distributeur 13 a une forme générale annulaire autour de l'axe X et est formé d'une seule pièce. Il est ici rapporté et fixé sur le porte-satellites 10 et peut comprendre pour cela des pattes (non représentées) de fixation sur la cage 14 du porte-satellites.

Le distributeur 13 comprend des circuits d'huile 20, 21, 23 indépendants, comportant :
- un premier circuit d'huile 20 comportant une première entrée d'huile 20a reliée par une première chambre annulaire 20b à plusieurs sorties d'huile 20c réparties sur une première circonférence C1 autour de l'axe X,
- un second circuit d'huile 21 comportant une seconde entrée d'huile 21a reliée par une seconde chambre annulaire 21b à plusieurs sorties d'huile 21c réparties sur une seconde circonférence C2 autour de l'axe X, et
- un troisième circuit d'huile 23 indépendant de récupération d'huile du réducteur, ce troisième circuit d'huile comportant plusieurs entrées d'huile 23a réparties sur une troisième circonférence C6 autour de l'axe X et reliées par une troisième chambre annulaire 23b à au moins une sortie d'huile 23c. Comme on le voit notamment à la figure 4, les entrées 23a et les sorties 20c sont de préférence réalisées dans des bossages 25 du distributeur 13. Ces bossages 25 sont régulièrement répartis autour de l'axe X, sur un même côté axial, ici amont, du distributeur 13.

La circonférence C1 a un diamètre D1, la circonférence C2 a un diamètre D2, et la circonférence C6 a un diamètre D6.

D2 est supérieur à D1. D6 est ici similaire voire identique à D1 mais pourrait être différent de D1.

Dans l'exemple représenté, D1, D2 et D6 sont chacun supérieurs à D5 qui est le diamètre interne de l'anneau 15b. Le distributeur 13 est diamétralement plus petit que D5 ce qui autorise son montage/démontage sans avoir besoin de toucher au reste. A cause des broches 17 et des déflecteurs 18, la cage 14 et le porte-cage 15 sont montés en premier, puis le solaire 7, les satellites 8, les axes 10b et enfin le distributeur 13.

Les chambres 20b, 21b, 23b sont formées par des anneaux tubulaires coaxiaux et intimement liés, c'est-à-dire que leurs parois tubulaires sont fusionnées. Ces chambres ont en section axiale une forme générale quelconque et les sections de passage des chambres sont sensiblement constantes sur toute leur étendue angulaire. Dans l'exemple représenté, les chambres 21b, 23b ont en section une forme générale semi-circulaire et la chambre 20b a en section une forme générale rectangulaire. On voit également que les chambres sont disposées de manière étagée radialement, la chambre 21b s'étendant autour de la chambre 20b qui s'étend autour de la chambre 23b (cf. figure 5).

La première chambre 20b s'étend sensiblement sur une circonférence C4 de diamètre D4 compris entre D1 et D2. La seconde chambre 21b s'étend sensiblement sur une autre circonférence C4' de diamètre D4' compris entre D1 et D2. La troisième chambre 23b s'étend sensiblement sur une autre circonférence C4" de diamètre D4" compris entre D1 et D2. D4" est inférieur à D4' qui est inférieur à D4. Les circonférences C4, C4' et C4" sont centrées sur l'axe X.

Comme on le voit aux figures 3 et 5, les chambres 20b, 21b, 23b s'étendent dans un plan P2 perpendiculaire à l'axe X, qui passe entre la cage 14, d'une part, et l'anneau 15b du porte-cage 15, d'autre part. On constate également que le diamètre D4" est supérieur à celui D3' du tronçon 3b pour éviter tout risque de contact en fonctionnement.

Les entrées 20a, 21a et la sortie 23c peuvent être orientées en direction radiale par rapport à l'axe X. La sortie 23c est de préférence située à 6h par analogie avec le cadran d'une horloge afin que l'huile s'écoule par gravité du distributeur 13 jusqu'à un système de recyclage.

Le plan P3 est de préférence situé entre la cage 14 et l'anneau 15b du porte-cage 15.

Le distributeur 13 est avantageusement configuré pour être raccordé fluidiquement, au niveau de ses entrées et de ces sorties, par des emmanchements du type mâle-femelle, c'est-à-dire par des raccords nécessitant seulement un emboîtement par translation axiale d'un raccord mâle dans un raccord femelle. Même si un raccord est présenté dans ce qui suit comme mâle et destiné à coopérer avec un raccord femelle, il peut en variante être remplacé par un raccord femelle destiné donc à coopérer avec un raccord mâle, et inversement. L'étanchéité des raccords mâle-femelle peut être assurée par des joints toriques ou analogues.

En ce qui concerne les entrées 20a, 21a et la sortie 23c, elles peuvent comprendre chacune un raccord femelle qui est destiné à recevoir le raccord mâle d'un tuyau relié à une source d'huile de lubrification.

En ce qui concerne les sorties 20c, elles comprennent chacune un raccord femelle 20ca dans l'exemple représenté qui est destiné à recevoir le raccord mâle d'un des déflecteurs 18. Ces sorties 20c sont orientées axialement, toutes dans la même direction ici vers l'avant.

En ce qui concerne les sorties 21c, elles comprennent chacune un raccord femelle dans l'exemple représenté qui est destiné à recevoir un raccord mâle d'un des noyaux 22 de lubrification et de refroidissement.

Les noyaux 22 ont pour fonction de lubrifier et de refroidir les axes 10b des satellites 8 qui sont ici centrés et guidés par les paliers 11 à rouleaux 11a.

Dans les exemples de réalisation représentés, chaque axe 10b est guidé par un palier 11 à double roulement, c'est-à-dire à double rangée de rouleaux 11a. Les deux rangées s'étendent autour d'un même axe qui est confondu avec celui, noté Y, de l'axe 10b du satellite 8.

Les sorties 21c sont orientées axialement, toutes dans la même direction ici vers l'avant. Les raccords de ces sorties sont reliées à la chambre 21b par des conduits 21d sensiblement en L.

En ce qui concerne les entrées 23a, elles comprennent chacune un raccord femelle dans l'exemple représenté qui est destiné à recevoir un raccord mâle d'un des déflecteurs 18. Ces entrées 23a sont orientées axialement, toutes dans la même direction ici vers l'avant.

Enfin, comme on le voit à la figure 5, les canaux 21d sont reliés à l'anneau formant la chambre 21b par des piquages situés sur la périphérie externe de cet anneau, alors que les entrées 23a et les sorties 20c sont directement formées sur l'anneau formant les chambres.

Les figures 5 à 9 illustrent un mode de réalisation d'un déflecteur 18. Comme évoqué dans ce qui précède, le réducteur 6 comprend plusieurs déflecteurs 18 qui sont logés dans la cage 14 et sont chacun disposés entre deux satellites 8 adjacents. Le nombre de déflecteurs 18 du réducteur 6 est donc égal au nombre de satellites 8 de ce réducteur.

La première fonction d'un déflecteur 18 est de guider l'huile de lubrification des dentures et d'éviter la recirculation d'huile entre satellites, d'où la notion de « déflecteur inter-satellites ». Les déflecteurs 18 sont ainsi conformés pour épouser la forme périphérique des satellites 8.

Comme on le voit dans les dessins, en plus de s'étendre entre deux satellites 8 adjacents, chaque déflecteur 18 est situé entre le solaire 7 d'une part, situé radialement à l'intérieur, et un couple de pontets 14c, 14d, d'autre part, situé radialement à l'extérieur.

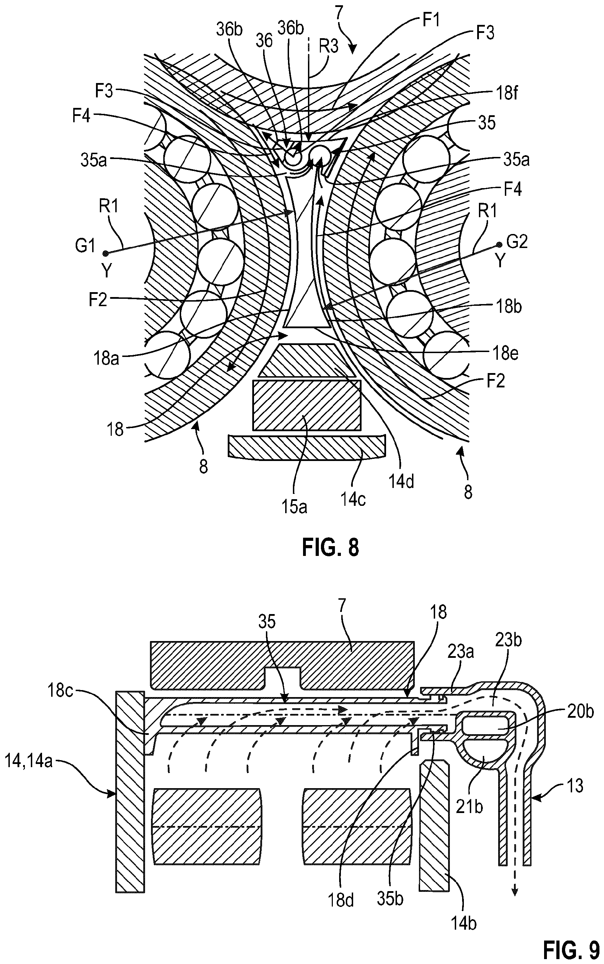

Chaque déflecteur 18 comporte un bloc comprenant une première surface latérale 18a qui est cylindrique et concave et qui a un rayon de courbure R1 mesuré depuis un axe G1, qui est confondu avec l'axe Y de rotation d'un satellite 8 (figure 8). Le bloc comporte une seconde surface latérale 18b, opposée à la première surface 18a, qui est cylindrique et concave et qui a un rayon de courbure R1 mesuré depuis un axe G2 qui est parallèle à G1, et qui est confondu avec l'axe Y de rotation d'un autre satellite 8.

Le bloc de chaque déflecteur 18 comprend en outre une face plane amont 18c, qui est sensiblement radiale lorsque le déflecteur est monté dans la cage 14 du réducteur, et une face plane aval 18d, qui est également sensiblement radiale. Le bloc comporte en outre une face plane 18e radialement extérieure, qui est destinée à être orientée du côté du couple de pontets 14c, 14d, et une face 18f radialement intérieure, qui est destinée à être orientée du côté du solaire 7. Cette face 18f est cylindrique et concave et a un rayon de courbure R3 mesuré depuis un axe, qui est confondu avec l'axe X du solaire. Cette face 18f a donc pour fonction de guider l'huile de lubrification de la denture du solaire.

Les déflecteurs 18 s'étendent entre les parois radiales 14a, 14b de la cage 14 et ont leurs faces 18c, 18d qui sont en appui sur les faces internes en regard de ces parois 14a, 14b. Les déflecteurs 18 sont fixés à la cage 14 par des vis par exemple.

Chaque déflecteur 18 comprend deux circuits d'huile 35, 36 intégrés indépendants, qui comprennent :
- un premier circuit 36 d'huile de lubrification qui comprend au moins un port 36a d'entrée d'huile et au moins un orifice 36b ou port de sortie d'huile en vue de la lubrification du réducteur,
- un second circuit 35 de récupération d'huile, indépendant du premier circuit 36, et qui comprend au moins un orifice 35a d'entrée d'huile et au moins un port 35b de sortie d'huile en vue du recyclage d'huile

Le premier circuit 36 comprend une entrée d'huile 36a reliée par des perçages à au moins un orifice de sortie d'huile 36b. Dans l'exemple représenté, l'entrée d'huile 36a est située sur la face aval 18d et comprend une tubulure destinée à former un raccord mâle et à coopérer par emmanchement mâle-femelle avec une sortie 20c du distributeur 13 décrit dans ce qui précède. Même si un raccord est présenté dans ce qui suit comme mâle et destiné à coopérer avec un raccord femelle, il peut en variante être remplacé par un raccord femelle destiné donc à coopérer avec un raccord mâle, et inversement (figure 3). Les orifices 36b sont ici situés à proximité de la face 18f du déflecteur et sont orientés vers les dentures du solaire 7 et d'au moins un satellite 8.

Chaque déflecteur 18 peut comprendre au moins un port 36c de sortie d'huile formant un raccord femelle qui est destiné à recevoir une douille 37 de raccordement fluidique étanche (figures 3 et 5). Comme l'entrée 36a, la douille 37 peut être supprimée et remplacée par un raccord mâle. Le port 36c est ici situé sur la face radialement externe 18e de chaque déflecteur. La figure 3 permet de voir qu'une moitié de la douille 37 est engagée par emmanchement mâle-femelle dans le port 36c et que l'autre moitié est engagée par emmanchement mâle-femelle dans un orifice femelle prévu à l'extrémité radialement interne du corps 17a de la broche 17 portée par un couple de pontets 14c, 14d.

Le second circuit 35 comprend des orifices d'entrée d'huile 35a qui sont situés sur les faces 18a, 18b dans l'exemple représenté. L'huile qui s'écoule en fonctionnement sur ces faces 18a, 18b est ainsi récupérée pour être recyclée, ce qui évite sa re-projection sur les satellites 8 adjacents.

Le second circuit 35 comprend en outre un port 35b de sortie d'huile qui est situé sur la face aval 18d et comprend une tubulure destinée à former un raccord mâle et à coopérer par emmanchement mâle-femelle avec une entrée 23a du distributeur 13 décrit dans ce qui précède. Même si un raccord est présenté dans ce qui suit comme mâle et destiné à coopérer avec un raccord femelle, il peut en variante être remplacé par un raccord femelle destiné donc à coopérer avec un raccord mâle, et inversement.

On constate sur les dessins que le port 36a d'entrée d'huile du premier circuit 36 et le port 35b de sortie d'huile du second circuit 35 sont situés à proximité l'un de l'autre et sur une même face 18d du bloc du déflecteur 18. Ces ports 36a, 35b sont ici situés à proximité de la face 18f du déflecteur et sont orientés dans des directions sensiblement parallèles.

La figure 8 permet de visualiser les sens de rotation du solaire 7 (flèche F1) et des satellites 8 (flèches F2), les orientations des projections d'huile depuis les orifices 36b du premier circuit 36 du déflecteur 18 (flèche F3) ainsi que les écoulements d'huile après lubrification et de récupération de cette huile dans le second circuit 35 du déflecteur 18 (flèche F4). Les figures 8 et 9 permettent d'observer que le circuit 35 est de préférence configuré pour profiter de la direction de l'huile centrifugée autour des satellites afin de conserver l'énergie de l'huile lors de sa récupération.

En fonctionnement, on comprend ainsi que de l'huile de lubrification est tout d'abord apportée par le distributeur 13 d'une part aux noyaux 22 et aux axes 10b des satellites 8 en vue de la lubrification des paliers 11, ainsi qu'aux premiers circuits 36 des déflecteurs 18 en vue de la lubrification des dentures du solaire 7 et des satellites 8. De l'huile de lubrification du réducteur 6 est projetée sur les faces 18a, 18b des déflecteurs 18 et s'écoule dans les seconds circuits 35 des déflecteurs par les orifices 35a. Cette huile est acheminée jusqu'aux ports 35b où elle est évacuée par le distributeur 13 en vue de son recyclage.

Le but est ici de collecter puis d'évacuer l'huile le plus vite possible après son utilisation dans l'engrènement.

L'invention vise ainsi pour un réducteur de type planétaire à proposer un distributeur d'huile qui alimente en huile les dentures des satellites et les paliers des satellites et qui permet également la récupération de cette huile pour l'évacuer efficacement.

A cet effet, le distributeur comprend des circuits d'alimentation en huile distincts du circuit d'évacuatuion d'huile.

On comprend que cela permet d'avacuer plus efficacement l'huile par rapport aux architectures de l'art antérieur où l'huile est récupérée après avoir coulée contre le carter et transiter vers une point bas (à 6h).

## Revendications

1. Distributeur (13) d'huile de lubrification pour un réducteur mécanique (6) de turbomachine (1), en particulier d'aéronef, ce distributeur ayant un corps de forme générale annulaire autour d'un axe (X) et comportant des circuits d'huile (23, 20) indépendants qui sont formés dans le corps, lesdits circuits comprennent :
- un circuit de récupération d'huile (23) configuré et dédié pour récupérer de l'huile, et comportant plusieurs premières entrées d'huile (23a) réparties sur le corps autour dudit axe (X) et reliées par une première chambre annulaire (23b) à au moins une première sortie d'huile (23c), et
- un circuit d'alimentation en huile (20) configuré et dédié pour alimenter en huile en particulier des dentures du réducteur, et comportant une seconde entrée d'huile (20a) reliée par une seconde chambre annulaire (20b) à plusieurs secondes sorties d'huile (20c) réparties sur le corps autour dudit axe (X), les première et second chambre annulaires (23b, 20b) s'étendant circonférentiellement autour de l'axe (X) à des diamètres différents,
**caractérisé en ce que** les circuits de récupération d'huile (23) et d'alimentation en huile (20) étant indépendants de façon à ne pas gêner la récupération de l'huile par l'alimentation en huile, et inversement.

2. Distributeur (13) selon la revendication 1, dans lequel lesdits circuits comprennent un autre circuit d'alimentation en huile (21) indépendant et configuré pour alimenter en huile en particulier des paliers du réducteur, cet autre circuit d'alimentation (21) comportant au moins une troisième entrée d'huile (21a) reliée par une troisième chambre annulaire (21b) à plusieurs troisièmes sorties d'huile (21c) réparties sur le corps autour dudit axe (X).

3. Distributeur (13) selon la revendication précédente, dans lequel la première sortie d'huile (23c) du circuit de récupération (23), la seconde entrée d'huile (20a) du circuit d'alimentation (20), et la troisième entrée d'huile (21a) de l'autre circuit d'alimentation (21), sont orientées en direction radiale par rapport audit axe (X).

4. Distributeur (13) selon la revendication 2 ou 3, dans lequel la première entrée (23a) du circuit de récupération (23), lesdites secondes sorties (20c) du circuit d'alimentation, et lesdites troisièmes sorties (21c) de l'autre circuit d'alimentation (21), sont orientées axialement dans la même direction.

5. Distributeur (13) selon l'une des revendications 2 à 4, dans lequel il comprend des bossages (25) répartis sur le corps autour dudit axe (X), chacun de ces bossages comportant une des premières entrées (23a) du circuit de récupération (23) et une des secondes sorties (20c) du circuit d'alimentation (20).

6. Distributeur (13) selon l'une des revendications 2 à 5, dans lequel la troisième annulaire (21b) de l'autre circuit d'alimentation (21) a un diamètre supérieur à celui de la second chambre annulaire (20b) du circuit d'alimentation (20), qui est lui-même de préférence supérieur à celui de la première chambre annulaire (23b) du circuit de récupération (23).

7. Distributeur (13) selon l'une des revendications précédentes, dans lequel le corps est réalisé d'une seule pièce.

8. Réducteur mécanique (6) pour une turbomachine d'aéronef, ce réducteur comportant une cage (14) définissant un logement de réception d'un solaire central (7) d'axe (X) de rotation, des satellites (8) disposés autour du solaire, des déflecteurs (18) fixés à la cage et disposés entre les satellites, et un distributeur (13) selon l'une des revendications précédentes qui est rapporté et fixé sur la cage et qui est raccordé aux déflecteurs (18), le distributeur étant configuré pour alimenter en huile de lubrification des dentures du solaire et des satellites, voire des paliers (11) de satellite, et pour récupérer au moins une partie de cette huile par l'intermédiaire desdits déflecteurs (18).

9. Réducteur (6) selon la revendication précédente, dans lequel chacun des déflecteurs (18) comprend un bloc comportant deux faces latérales (18a, 18b) opposées de forme générale incurvée s'étendant autour desdits satellites, et sur lesquelles sont situés des orifices (35a) d'entrée d'huile en communication fluide avec le circuit (23) de récupération en huile de dentures du réducteur.

10. Réducteur selon la revendication précédente, dans lequel lesdits orifices (35a) d'entrée d'huile sont reliés à un port (35b) de sortie d'huile du bloc du déflecteur, par l'intermédiaire de canaux internes du bloc qui sont conformées pour acheminer l'huile récupérée jusqu'à ce port grâce aux forces centrifuges appliquées sur cette huile projetée par les satellites disposés de part et d'autre du déflecteur.

11. Turbomachine d'aéronef, comportant un réducteur mécanique (6) équipé d'un porte-satellites (10) selon la revendication précédente.

## Patentansprüche

1. Verteiler (13) für Schmieröl für ein mechanisches Untersetzungsgetriebe (6) einer Turbomaschine (1), insbesondere eines Luftfahrzeugs, wobei dieser Verteiler einen allgemein ringförmigen Körper um eine Achse (X) aufweist und unabhängige Ölkreisläufe (23, 20) umfasst, die im Körper gebildet sind, wobei die Kreisläufe umfassen:
- einen Ölrückgewinnungskreislauf (23), der dazu ausgelegt und dediziert ist, Öl zurückzugewinnen, und mehrere erste Öleingänge (23a) umfasst, die auf dem Körper um die Achse (X) verteilt sind und über eine erste ringförmige Kammer (23b) mit mindestens einem ersten Ölausgang (23c) verbunden sind, und
- einen Ölversorgungskreislauf (20), der dazu ausgelegt und dediziert ist, insbesondere Verzahnungen des Untersetzungsgetriebes mit Öl zu versorgen, und einen zweiten Öleingang (20a) umfasst, der über eine zweite ringförmige Kammer (20b) mit mehreren zweiten Ölausgängen (20c) verbunden ist, die auf dem Körper um die Achse (X) verteilt sind, wobei sich die erste und die zweite ringförmige Kammer (23b, 20b) umlaufend mit unterschiedlichen Durchmessern um die Achse (X) erstrecken,
**dadurch gekennzeichnet, dass** der Ölrückgewinnungskreislauf (23) und der Ölversorgungskreislauf (20) unabhängig sind, sodass die Rückgewinnung des Öls nicht durch die Versorgung mit Öl behindert wird und umgekehrt.

2. Verteiler (13) nach Anspruch 1, wobei die Kreisläufe einen weiteren Ölversorgungskreislauf (21) umfassen, der unabhängig ist und dazu ausgelegt ist, insbesondere Lager des Untersetzungsgetriebes mit Öl zu versorgen, wobei dieser weitere Versorgungskreislauf (21) mindestens einen dritten Öleingang (21a) umfasst, der über eine dritte ringförmige Kammer (21b) mit mehreren dritten Ölausgängen (21c) verbunden ist, die auf dem Körper um die Achse (X) verteilt sind.

3. Verteiler (13) nach dem vorstehenden Anspruch, wobei der erste Ölausgang (23c) des Rückgewinnungskreislaufs (23), der zweite Öleingang (20a) des Versorgungskreislaufs (20) und der dritte Öleingang (21a) des weiteren Versorgungskreislaufs (21) in Bezug auf die Achse (X) in radialer Richtung ausgerichtet sind.

4. Verteiler (13) nach Anspruch 2 oder 3, wobei der erste Eingang (23a) des Rückgewinnungskreislaufs (23), die zweiten Ausgänge (20c) des Versorgungskreislaufs und die dritten Ausgänge (21c) des weiteren Versorgungskreislaufs (21) axial in der gleichen Richtung ausgerichtet sind.

5. Verteiler (13) nach einem der Ansprüche 2 bis 4, wobei er Vorsprünge (25) umfasst, die auf dem Körper um die Achse (X) verteilt sind, wobei jeder dieser Vorsprünge einen der ersten Eingänge (23a) des Rückgewinnungskreislaufs (23) und einen der zweiten Ausgänge (20c) des Versorgungskreislaufs (20) umfasst.

6. Verteiler (13) nach einem der Ansprüche 2 bis 5, wobei die dritte ringförmige (21b) des weiteren Versorgungskreislaufs (21) einen größeren Durchmesser aufweist als jener der zweiten ringförmigen Kammer (20b) des Versorgungskreislaufs (20), der selbst vorzugsweise größer ist als jener der ersten ringförmigen Kammer (23b) des Rückgewinnungskreislaufs (23).

7. Verteiler (13) nach einem der vorstehenden Ansprüche, wobei der Körper aus einem einzigen Stück hergestellt ist.

8. Mechanisches Untersetzungsgetriebe (6) für eine Turbomaschine eines Luftfahrzeugs, wobei dieses Untersetzungsgetriebe einen Käfig (14), der einen Aufnahmesitz eines Sonnenrads (7) mit Drehachse (X) definiert, Planeten (8), die um das Sonnenrad angeordnet sind, Deflektoren (18), die am Käfig befestigt sind und zwischen den Planeten angeordnet sind, und einen Verteiler (13) nach einem der vorstehenden Ansprüche umfasst, der am Käfig angestückt und befestigt ist und der mit den Deflektoren (18) verbunden ist, wobei der Verteiler dazu ausgelegt ist, Verzahnungen des Sonnenrads und der Planeten, sogar Planetenlager (11), mit Schmieröl zu versorgen, und dazu, mindestens einen Teil dieses Öls mithilfe der Deflektoren (18) zurückzugewinnen.

9. Untersetzungsgetriebe (6) nach dem vorstehenden Anspruch, wobei jeder der Deflektoren (18) einen Block umfasst, der zwei gegenüberliegende seitliche Flächen (18a, 18b) mit allgemein gekrümmter Form umfasst, die sich um die Planeten erstrecken und auf denen sich Öleingangsöffnungen (35a) in strömungstechnischer Kommunikation mit dem Ölrückgewinnungskreislauf (23) von Verzahnungen des Untersetzungsgetriebes befinden.

10. Untersetzungsgetriebe nach dem vorstehenden Anspruch, wobei die Öleingangsöffnungen (35a) mit einem Ölausgangsanschluss (35b) des Blocks des Deflektors über innere Kanäle des Blocks verbunden sind, die dazu angepasst sind, das zurückgewonnene Öl mithilfe von Zentrifugalkräften bis zu diesem Anschluss zu leiten, die auf dieses Öl angelegt werden, das über die Planeten, die beiderseits des Deflektors angeordnet sind, ausgeworfen wird.

11. Turbomaschine eines Luftfahrzeugs, umfassend ein mechanisches Untersetzungsgetriebe (6) das mit einem Planetenträger (10) nach dem vorstehenden Anspruch ausgestattet ist.

## Claims

1. A lubricating oil distributor (13) for a mechanical reduction gear (6) of a turbomachine (1), in particular of an aircraft, this distributor having a body of generally annular shape around an axis (X) and comprising independent oil circuits (23, 20) which are formed in the body, said circuits comprise :
- an oil recovery circuit (23) configured and dedicated to recover oil, and comprising several first oil inlets (23a) distributed over the body around said axis (X) and connected by an first annular chamber (23b) to at least one first oil outlet (23c), and
- an oil supply circuit (20) configured and dedicated to supply oil in particular to toothing of the reduction gear, and comprising a second oil inlet (20a) connected by a second annular chamber (20b) to several second oil outlets (20c) distributed on the body around said axis (X), the first and second annular chambers (23b, 20b) extending circumferentially around the axis (X) at different diameters,
**characterized in that** the oil recovery and supply circuit (23, 20) being independent so that the oil recovery is not hindered by the oil supply, and vice versa.

2. The distributor (13) according to claim 1, wherein said circuits comprise a further oil supply circuit (21) which is independent and configured to supply oil in particular to the bearings of the reduction gear, said further supply circuit (21) comprising at least one third oil inlet (21a) connected by a third annular chamber (21b) to several third oil outlets (21c) distributed on the body around said axis X.

3. The distributor (13) according to the preceding claim, wherein the first oil outlet (23c) of the recovery circuit (23), the second oil inlet (20a) of the supply circuit (20), and the third oil inlet (21a) of the further supply circuit (21), are oriented in a radial direction with respect to said axis X.

4. The distributor (13) according to one of claims 2 or 3, wherein the first inlet (23a) of the recovery circuit (23), said second outlets (20c) of the supply circuit, and said third outlets (21c) of the further supply circuit (21) are oriented axially in the same direction.

5. The distributor (13) according to one of claims 2 to 4, wherein it comprises bosses (25) distributed on the body around said axis (X), each of these bosses comprising one of the first inlets (23a) of the recovery circuit (23) and one of the second outlets (20c) of the supply circuit (20).

6. The distributor (13) according to one of claims 2 to 5, wherein the third annular chamber (21b) of the further supply circuit (21) has a larger diameter than that of the second annular chamber (20b) of the supply circuit (20), which is itself preferably larger than that of the first annular chamber (23b) of the recovery circuit (23).

7. The distributor (13) according to one of the preceding claims, wherein the body is made in one piece.

8. A mechanical reduction gear (6) for an aircraft turbomachine, this reduction gear comprising a cage (14) defining a housing for receiving a central sun gear (7) of axis (X) of rotation, planet gears (8) arranged around the sun gear, deflectors (18) fixed to the cage and arranged between the planet gears, and a distributor (13) according to one of the preceding claims which is attached and fixed to the cage and which is connected to the deflectors (18), the distributor being configured to supply lubricating oil to toothing of the sun gear and planet gears or even to planet gear bearings (11) and to recover at least a part of this oil via said deflectors (18).

9. The reduction gear (6) according to the preceding claim, wherein each of the deflectors (18) comprises a block comprising two opposite side faces (18a, 18b) of generally curved shape extending around said planet gears, and on which are located oil inlet orifices (35a) in fluid communication with the oil recovery circuit (23) for recovering oil from toothing of the reduction gear.

10. The reduction gear according to the preceding claim, wherein said oil inlet orifices (35a) are connected to an oil outlet port (35b) of the block of the deflector, via inner channels of the block which are shaped to convey the recovered oil to this port by means of the centrifugal forces applied to this oil projected by the planet gears arranged on either side of the deflector.

11. An aircraft turbomachine, comprising a mechanical reduction gear (6) equipped with a planet carrier (10) according to the preceding claim.
